# EUROPÄISCHE PATENTSCHRIFT

(11) **EP 4 260 007 B1**
(45) Veröffentlichungstag und Bekanntmachung des Hinweises auf die Patenterteilung: **03.09.2025**
(21) Anmeldenummer: 21843583.2
(22) Anmeldetag: 09.12.2021
(51) Int. Cl.: G01B 11/25

(54) **VERFAHREN ZUR VERMESSUNG DER KOTFLÜGELKANTE EINES FAHRZEUGS IN EINEM PRÜFSTAND**
METHOD FOR MEASURING THE MUDGUARD EDGE OF A VEHICLE ON A TEST BENCH
PROCÉDÉ DE MESURE DE BORD DE GARDE-BOUE D'UN VÉHICULE SUR UN BANC D'ESSAI

(30) Priorität: 11.12.2020 DE 102020133085
(43) Veröffentlichungstag der Anmeldung: 18.10.2023
(73) Patentinhaber: Dürr Assembly Products GmbH, 66346 Püttlingen (DE)
(72) Erfinder: TENTRUP, Thomas, 66663 Merzig-Mechern (DE); DEUTSCH, André, 67260 Herbitzheim (FR); KAUFMANN, Joachim, 66740 Saarlouis (DE); STROH, Simon, 66793 Saarwellingen (DE); PETZINGER, Christian, 66265 Heusweiler (DE)
(74) Vertreter: RPK Patentanwälte Reinhardt und Kaufmann Partnerschaft mbB
(86) Internationale Anmeldenummer: PCT/DE2021/100987
(87) Internationale Veröffentlichungsnummer: WO 2022/122085

(56) Entgegenhaltungen:
- DE-A1- 102007 021 328
- US-A1- 2014 267 699

## Beschreibung

Die vorliegende Erfindung betrifft ein Verfahren zur Vermessung der Kotflügelkante eines Fahrzeugs in einem Prüfstand gemäß Anspruch 1.

Aus der US 2014/267699 A1 ist es bekannt, eine 3D-Punktwolke auf ein Fahrzeugrad zu projizieren und die 3D-Punktwolke mittels stereo-photogrammetrischer Methoden zu erfassen und auszuwerten. Die Auswertung erfolgt, indem bei drehendem Rad aufeinanderfolgend mehrere Aufnahmen und Auswertungen der jeweiligen 3D-Punktwolke durchgeführt werden. Dabei werden bei der Auswertung nur die Punkte der 3D-Punktwolke berücksichtigt, die von dem Fahrzeugrad gestreut wurden. Damit sollen die Parameter der Radgeometrie (Spur- und Sturzwinkel) ermittelt werden.

Aus der DE 10 2007 021 328 A1 ist es bekannt, zur Vermessung von Teilen eines Fahrzeugs ein Lichtmuster aus strukturiertem Licht auf das Fahrzeug zu projizieren. Die Auswertung erfolgt stereo-photogrammetrisch. Das ausgesendete Lichtmuster wird in einem schmalbandigen Längenwellenbereich ausgesendet. Ebenso erfolgt die Erfassung des gestreuten Lichts nur in dem schmalbandigen Wellenlängenbereich. Damit sollen störende Einflüsse durch Fremdlicht (Umgebungslicht) minimiert werden.

Zur besseren Darstellung der Erfindung wird zunächst ein Koordinatensystem des Prüfstands wie folgt definiert. Der Prüfstand weist ein Koordinatensystem auf,
> bei dem die Z-Achse die vertikale Achse ist,
> bei dem die X-Achse eine Achse in dem Prüfstand ist, die sich in der horizontalen Ebene in Längsrichtung eines zur Prüfung in dem Prüfstand befindlichen Fahrzeugs erstreckt, und
> bei dem die Y-Achse eine Achse ist, die sich senkrecht zur X-Achse sowie senkrecht zur Z-Achse erstreckt.

Eine Vermessung der Kotflügelkante erfolgt beispielsweise in den Anwendungsbereichen Entwicklung, Produktion, im After-Sales-Bereich oder bei der technischen Überwachung als regelmäßige Überprüfung im Betrieb befindlicher Fahrzeuge auf deren Verkehrssicherheit.

Durch die Vermessung der Kotflügelkante kann die Position und Orientierung der Kotflügelkante bestimmt werden. Die Position und die Orientierung der Kotflügelkante können absolut im Koordinatensystem des Prüfstandes bestimmt werden oder auch in Relation zu anderen Bauteilen des Fahrzeuges. Diese anderen Bauteile können beispielsweise Räder, Felgen und/oder Bremsscheiben sein.

Die Position und Orientierung der Kotflügelkante wird verwendet, um den sogenannten "Höhenstand" des Fahrzeugs zu bestimmen. Es handelt sich dabei um den Einfederweg der Fahrzeugkarosserie. Der Höhenstand ist der Abstand der Kotflügelkante (bzw. eines charakteristischen Punktes auf der Kotflügelkante) zur Radmitte. Die Z-Koordinaten der Daten der Position und Orientierung der Kotflügelkante bestimmen den Höhenstand des Fahrzeugs.

Außer der Bestimmung des Höhenstandes können die ermittelten Daten der Position und Orientierung der Kotflügelkante auch verwendet werden, um die Breite des Fahrzeugs zu bestimmen. Hierzu können die Y-Koordinaten der Position und Orientierung der Kotflügelkante von sich auf den beiden Fahrzeugseiten gegenüberliegenden Kotflügeln herangezogen werden.

Vorrichtungen zur photogrammetrischen Vermessung von Objekten sind bekannt in der Form, dass diese aus einer Belichtungseinheit und mehreren Abbildeinheiten bestehen. Von der Belichtungseinheit wird Licht ausgestrahlt. Dieses Licht wird von dem zu vermessenden Objekt gestreut. Das gestreute Licht wird von den Abbildeinheiten aufgenommen. Die Aufnahmen der Abbildeeinheiten werden ausgewertet. Durch diese Auswertung entsteht eine Punktwolke als dreidimensionale Anordnung der Punkte als Datensatz. Dabei entsprechen die Punkte der Punktwolke Punkten auf der Oberfläche des Objektes, das das Licht streut. Die Berechnung der Punktwolke erfolgt mit zwei oder mehr Abbildeinheiten als Photogrammmetrie.

Die Abbildeinheiten sind Kameras. Die Berechnung und Auswertung kann in einer Auswertungseinrichtung erfolgen, die als separates Bauteil den Abbildeinheiten nachgeordnet sein kann. In diesem Fall werden Signale der Abbildeinheiten als Eingangssignale der Auswertungseinrichtung zugeführt. Es ist auch möglich, die Auswertungseinrichtung als Bauteil mit den Abbildeinheiten zu integrieren. In der Auswertungseinrichtung ist eine Software implementiert, die die Funktionen der Berechnung und Auswertung ausführt.

Bei der Photogrammmetrie wird über die Belichtungseinheit eine flächig codierte Textur auf die Oberfläche des zu vermessenden dreidimensionalen Objektes gelegt. "Textur" bedeutet im vorliegenden Zusammenhang, dass es sich um ein bestimmtes Lichtmuster handelt. Diese Textur dient als Hilfsmittel bei der Auswertung der von den Abbildeinheiten aufgenommenen Bilder. Die Abbildeinheiten betrachten das Objekt aus unterschiedlichen Richtungen. Deswegen "sehen" diese Abbildeinheiten das gleiche Lichtmuster auf der Oberfläche aus unterschiedlichen Richtungen. Aufgrund der flächig codierten Belichtungstextur wird es dann bei der Auswertung möglich, die jeweils übereinstimmenden Punkte der Abbildeinheiten einander zuordnen. Die Position der Punkte wird über die Bildinformation der Abbildeinheiten im Raum im Bezug zum Koordinatensystem der Vorrichtung zur photogrammetrischen Vermessung errechnet. Die Position und Orientierung des Koordinatensystems der Vorrichtung zur photogrammetrischen Vermessung ist in Bezug zum Koordinatensystem des Fahrzeugprüfstandes kalibriert. Aus diesen Punkten ergibt sich damit eine dreidimensionale Punktwolke des Objektes im Koordinatensystem der Vorrichtung zur photogrammetrischen Vermessung. Daraus ergibt sich auch die dreidimensionale Punktwolke des Objektes im Koordinatensystem des Fahrzeugprüfstandes.

Um eine hohe Messgenauigkeit bei der Erfassung der Position und Orientierung der Kotflügelkante zu erreichen, ist es notwendig, eine hohe Punktedichte in der Punktwolke zu haben. Mit einer hohen Punktedichte steigt die Zahl der Punkte, die in die Berechnung eingehen bei der Auswertung der Position und Orientierung der Kotflügelkante. Dies erfordert bei einer entsprechend hohen Punktedichte eine nicht unerhebliche Rechenzeit. Insbesondere bei der Produktion von Fahrzeugen erfordert eine Berechnung mit einer hohen Punktedichte bei der Auswertung so viel Zeit, dass sich dies negativ auf die Taktzeiten auswirkt.

Eine Vorrichtung zur berührungslosen Bestimmung der Position und Orientierung der Kotflügelkante eines Fahrzeugs ist aus der EP 0 757 229 B1 bekannt. Die Vorrichtung umfasst erste Mittel zum Bestimmen der Position eines definierten Punktes der Karosserie des Fahrzeugs in z-Richtung, zweite Mittel zum Bestimmen der Position des Radmittelpunktes in z-Richtung, sowie eine Auswerteeinheit zum Berechnen des Höhenstandes des Fahrzeuges aus den mit den ersten und zweiten Mitteln bestimmten Positionen, welche mit den ersten und den zweiten Mitteln verbunden ist.

Mit der vorliegenden Erfindung soll ein Verfahren vorgeschlagen werden, mit dem die Position und Orientierung der Kotflügelkante einfach bestimmt werden kann.

Diese Aufgabe wird nach der vorliegenden Erfindung gelöst nach Anspruch 1 durch ein Verfahren zur Vermessung der Kotflügelkante eines Fahrzeuges in einem Prüfstand. Der Prüfstand weist ein Koordinatensystem auf, bei dem die Z-Achse die vertikale Achse ist, die X-Achse eine Achse in dem Prüfstand, die sich in der horizontalen Ebene in Längsrichtung eines zur Prüfung in dem Prüfstand befindlichen Fahrzeugs erstreckt, und die Y-Achse eine Achse, die sich senkrecht zur X-Achse sowie senkrecht zur Z-Achse erstreckt. Das Verfahren umfasst folgende Schritte:
> Projektion eines gleichbleibenden Lichtmusters auf ein Fahrzeug mit mindestens einer Beleuchtungseinheit, wobei das Lichtmuster derart in gleich große Teilbereiche unterteilbar ist, dass die Teilbereiche des Lichtmusters individualisiert sind. Das bedeutet, dass die einzelnen Teilbereiche jeweils einzigartig innerhalb des Lichtmusters sind.
➢ Aufnahme des auf das Fahrzeug projizierten Lichtmusters mit zwei Abbildeinheiten, wobei die zwei Abbildeinheiten jeweils das momentan auf das Fahrzeug projizierte Lichtmuster aufnehmen.
> Verschieben des auf das Fahrzeug projizierten Lichtmusters durch Anregen einer Vibration der Beleuchtungseinheit oder zumindest wenigstens eines Bauteils der Beleuchtungseinheit.
> Stereophotogrammetrische Bestimmung einer 3D-Punktwolke aus den Aufnahmen des während der Vibration der Beleuchtungseinheit oder des zumindest wenigstens einen Bauteils der Beleuchtungseinheit auf das Fahrzeug projizierten Lichtmusters durch die beiden Abbildeinheiten,
> Identifizieren einer Teilmenge von Punkten aus der 3D-Punktwolke, wobei die Teilmenge gebildet wird durch die Schnittmenge
   ∘ der Punkte der Punktwolke
   o mit mehreren Volumina,
      ▪ wobei jedes Volumen begrenzt wird durch zwei Ebenen, die sich sowohl in Richtung der Y-Achse als auch in Richtung der Z-Achse erstrecken,
      ▪ wobei diese beiden Ebenen in Richtung der X-Achse zueinander einen Abstand Δx aufweisen,
      ▪ wobei sich mehrere dieser Volumina an benachbarten Positionen xₙ auf der X-Achse befinden, so dass als Resultat die Teilmenge eine 3D - Punktwolke mit Punkten innerhalb der Volumina ist,
> Bestimmung der Position und Orientierung der Kotflügelkante als Ergebnisdatensatz auf der Basis der Teilmenge der Punkte der 3D-Punktwolken.

Diese Merkmale bedeuten, dass das Lichtmuster als solches konstant ist. Zu den Punkten in der Punktwolke, die sich aus einer statisch emittierten Projektion des Lichtmusters auf ein Objekt ergeben, kommen nach der vorliegenden Erfindung weitere Punkte in der Punktwolke hinzu, die sich aus Aufnahmen ergeben, bei denen dasselbe (gleichbleibende) Lichtmuster auf das Objekt projiziert wird, wobei allerdings entweder die Beleuchtungseinheit insgesamt oder zumindest wenigstens ein Bauteil der Beleuchtungseinheit zu einer Vibration angeregt wird. Diese Vibration führt zu einer Verschiebung des projizierten Lichtmusters. Die Punkte in der Punktwolke werden also "ergänzt", indem in die Punktwolke auch die Punkte "integriert" werden, die in dem Moment aufgenommen werden, in dem das Lichtmuster durch die Vibration entsprechend verschoben ist.

Die Beleuchtungseinheit kann insgesamt zu Vibrationen angeregt werden. Die Beleuchtungseinheit kann beispielsweise so aufgebaut sein, dass mit einer Lichtquelle ein Bild beleuchtet wird, das beispielsweise als Dia zu der Beleuchtungseinheit angebracht ist. Es genügt in diesem Fall, das Dia zu Vibrationen anzuregen. Diese Anregung lediglich des Dias ist insofern vorteilhaft, weil das Dia gegenüber der Beleuchtungseinheit insgesamt eine geringere Masse und damit auch eine geringere Trägheit aufweist. Die Vibration des zumindest wenigstens einen Bauteils der Beleuchtungseinheit erfolgt also derart, dass das auf das Objekt projizierte Lichtmuster in seiner Position auf dem Objekt verschoben wird.

Durch die Verschiebung des auf das Fahrzeug projizierten Lichtmusters kann also vorteilhaft die Dichte der berechneten 3D-Punktwolke erhöht werden. Dabei bedeutet eine Erhöhung der Dichte der Punkte der Punktwolke eine Reduktion des mittleren Abstands der Punkte der Punktwolke. Die Verschiebung wird dabei durch eine Vibration der Beleuchtungseinheit oder zumindest wenigstens eines Bauteils der Beleuchtungseinheit verursacht. Beispielsweise kann die Verschiebung des Lichtmusters durch das Vibrieren einer von einem Leuchtmittel beleuchteten Fotoplatte erfolgen. Die Vibration kann beispielsweise durch einen elektrischen Vibrationsmotor, besonders bevorzugt durch ein Piezoelement, verursacht werden.

Auf die Oberfläche des Fahrzeugs wird durch die mindestens eine Beleuchtungseinheit ein gleichbleibendes Lichtmuster projiziert. Dabei befindet sich die zu vermessende Kotflügelkante in dem Bereich des Fahrzeuges, auf den das Lichtmuster projiziert wird.

Das Lichtmuster ist derart in gleich große Teilbereiche unterteilbar, dass die Teilbereiche des Lichtmusters individualisiert sind. Das bedeutet, dass die einzelnen Teilbereiche jeweils einzigartig innerhalb des Lichtmusters sind. Besonders vorteilhaft lassen sich diese Teilbereiche eindeutig innerhalb des Lichtmusters bestimmen. Das Lichtmuster kann auch aus mehreren Lichtmustern mit jeweils in dem Lichtmuster individualisierten Teilbereichen zusammengesetzt sein. Beispielsweise können zwei identische Lichtmuster mit individualisierten Teilbereichen zu einem Gesamt-Lichtmuster zusammengesetzt werden. Die Eindeutigkeit der Teilbereiche in dem Gesamt-Lichtmuster ergibt sich dabei aus der Zuordnung zu einem der beiden Lichtmuster.

Ein Beispiel für ein solches Lichtmuster ist eine Gesamtanordnung von beleuchteten und nicht beleuchteten Punkten. Die Gesamtanordnung ist derart unterteilbar, dass die Teilanordnungen von Punktmustern für die einzelnen Punkte der Gesamtanordnung unter Berücksichtigung weiterer Punkte, die zu dem jeweiligen einzelnen Punkt benachbart sind, für die einzelnen Punkte individualisiert sind. Diese Gesamtanordnung der beleuchteten und nicht beleuchteten Punkte kann als zeitgleiche und monochromatische Projektion der Anordnung von beleuchteten und nicht beleuchteten Punkten auf die zu vermessende Kotflügelkante erfolgen.

Ein weiteres Beispiel für ein Lichtmuster im Rahmen der vorliegenden Erfindung ist eine Textur, die sich aus einzelnen Flächenelementen zusammensetzt, deren Formen identisch sind. Diese Flächenelemente können dabei beispielsweise quadratisch sein. Die Flächenelemente können unmittelbar aneinander angrenzen, indem die Seitenkante eines Quadrates gleichzeitig eine Seitenkante eines benachbarten Flächenelementes bildet. Die Eindeutigkeit der Flächenelemente kann durch eine fehlende Periodizität der Markierung erreicht werden, indem der Zustand der einzelnen Flächenelemente im Sinne von "beleuchtet" oder "nicht beleuchtet" nicht periodisch ist. Damit entsteht beispielsweise eine Textur, deren optischer Eindruck vergleichbar ist dem optischen Eindruck eines QR-Codes, zumindest wenn dieser nur flüchtig betrachtet wird. Unterteilt man diese Textur in kleine Teilbereiche, beispielsweise ein Quadrat mit ihren 8 benachbarten Quadraten, ergeben sich für diese 9 Quadrate insgesamt 2^9 Kombinationsmöglichkeiten (d.h.: 512 Kombinationsmöglichkeiten) aus beleuchteten und nichtbeleuchteten Quadraten. Damit können 2^9 einzigartige Teilbereiche geschaffen werden, die eindeutig zugeordnet werden können. Wird der Teilbereich weiter gefasst und erfasst, beispielsweise die übernächsten Quadrate, erhöht sich diese Zahl mit jedem zusätzlichen Quadrat um den Faktor zwei.

Das projizierte Lichtmuster dient als Markierung auf der Oberfläche des Fahrzeuges. Diese Markierung wird durch die beiden Abbildeinheiten aufgenommen. In der Auswertung ist somit eine gemeinsame Zuordnung der Punkte auf der Oberfläche des Fahrzeugs über die Markierung möglich. Dies liegt daran, dass die einzelnen Teilmengen individualisiert sind.

Vorteilhaft kann die Beleuchtung mit einem gleichbleibendem Lichtmuster erfolgen. Dies reduziert die Komplexität der Beleuchtungseinheit, da keine dynamischen Lichtmuster oder Folgen von Lichtmustern erzeugt werden müssen. Insbesondere ist keine Identifizierungsphase notwendig, in der Teile des Lichtmusters sich ändern und/oder ein- und ausgeblendet werden. Dies ist im Stand der Technik teilweise notwendig, um damit eine Zuordnung dieser Teile zueinander vornehmen zu können. Es ist hierbei vorteilhaft, dass die Erfassung aller Punkte der Punktwolke zeitgleich erfolgt. Das Ausbleiben einer Identifizierungsphase erhöht die Messrate. "Zeitgleich" bedeutet in diesem Zusammenhang, dass die aufeinander folgenden Messungen bei der Vibration der Beleuchtungseinheit bzw. des zumindest wenigstens einen Bauteils der Beleuchtungseinheit in diesem Zusammenhang als eine einheitliche Messung zu verstehen ist. Die hier beschriebene Vorgehensweise der Vibration der Beleuchtungseinheit bzw. des zumindest wenigstens einen Bauteils der Beleuchtungseinheit dient im vorliegenden Verfahren der Erhöhung der Punktedichte. Die Vibration dient also nicht dazu, Punkte auf der Oberfläche des Fahrzeugs überhaupt zuordnen zu können. Die Vibration dient dazu, zusätzliche Punkte auf der Oberfläche zu erzeugen, so dass sich insgesamt eine höhere Punktedichte ergibt.

Dabei ist es vorteilhaft, eine kontrastreiches Lichtmuster zu wählen, um die Erkennung des auf die Oberfläche des Fahrzeugs projizierten Lichtmusters durch die Abbildeinheiten zu verbessern. Insbesondere binäre Muster, in denen sich Flächen maximaler Intensität (d. h.: beleuchtete Flächen) mit Flächen minimaler Intensität (d. h.: unbeleuchtete Flächen) abwechseln, bieten einen hohen Kontrast und sind damit besonders gut geeignet.

Dabei kann das von der Beleuchtungseinheit ausgesendete Licht monochromatisch sein. Vorteilhaft bedeutet dies, dass das ausgestrahlte sowie auch das gestreute Licht auch ohne besondere Maßnahmen der Abdunklung und mit einer begrenzten Intensität des ausgestrahlten Lichtes für das Verfahren nach der vorliegenden Erfindung einen ausreichenden Kontrast aufweist gegenüber dem Streulicht der Umgebung.

Soweit die Beleuchtungseinheit eine LED als Leuchtmittel aufweist, erweist es sich als vorteilhaft, dass nur eine kurze Aufwärmzeit zur Inbetriebnahme notwendig ist. Innerhalb von wenigen Minuten ist die Vorrichtung dann in der Regel einsatzbereit und bedarf keines langwierigen Aufheizens von Baugruppen. Dies ist besonders nach einer Inbetriebnahme der Vorrichtung vorteilhaft, da Betriebsverzögerungen und damit verbundene Verlängerungen der Taktzeiten bei der Fahrzeugherstellung vermieden werden können.

Aus den Aufnahmen des während der Vibration der Beleuchtungseinheit auf das Fahrzeug projizierten Lichtmusters durch die beiden Abbildeinheiten erfolgt die stereophotogrammetrische Bestimmung der 3D-Punktwolke. Dabei können aus den Bildpaaren der beiden Abbildeinheiten jeweils in jedem Verschiebungszustand als Momentaufnahme eine 3D-Punktwolke stereophotogrammetrisch bestimmt werden. Die gewonnenen einzelnen 3D-Punktwolken können zu einer gemeinsamen 3D-Puktwolke mit einer höheren Dichte von Punkten kombiniert werden. Alternativ können die Bildpaare der beiden Abbildeinheiten in mehreren Verschiebungszuständen durch einen Stereo-Matching-Algorithmus kombiniert werden und daraus eine Punktwolke mit einer höheren Dichte der Punkte im Vergleich zu den einzelnen Punktwolken gewonnen werden, die allein aus einem Bildpaar stereophotogrammetrisch bestimmt werden.

Die Teilmenge von Punkten aus der 3D-Punktwolke wird durch die Schnittmenge der Punkte der Punktwolke mit mehreren Volumina bestimmt. Das Resultat ist eine 3D-Punktwolke mit Punkten innerhalb der Volumina. Durch Vergrößerung des Abstands der beiden Ebenen der Volumina in Richtung der X-Achse Δx und durch eine größere Anzahl von Volumina kann die Anzahl der Punkte in der Teilmenge vergrößert werden.

Bevorzugt ist der Abstand der beiden Ebenen Δx größer als der mittlere Abstand der Punkte der Punktwolke, jedoch kleiner als das Doppelte des Abstands der Punkte der Punktwolke. Vorteilhaft befindet sich dadurch mindestens eine Reihe von Punkten in Z-Richtung für jedes Volumen in der Teilmenge. Dadurch bilden die Punkte in einem Volumen eine der Oberfläche des Fahrzeugs folgende gekrümmte, im Wesentlichen vertikale Linie. Die Anzahl der Volumina kann dabei bis zu 120 betragen.

**Besonders** vorteilhaft wird durch die Teilmenge der Punktwolke die Anzahl der Punkte für die Auswertung reduziert. Die reduzierte Anzahl von Punkten in der Teilmenge ermöglicht eine besonders schnelle und effiziente Bestimmung der Position und Orientierung der Kotflügelkante. Gleichzeitig erlaubt die erhöhte Dichte der Punktwolke in der Teilmenge eine erhöhte Messgenauigkeit. Wie ausgeführt wird die Dichte der Punktwolke besonders vorteilhaft auch durch die Vibration der Beleuchtungseinheit bzw. des zumindest wenigstens einen Bauteils der Beleuchtungseinheit erhöht.

Besonders vorteilhaft kann die Kotflügelkante durch die Punkte auf den gekrümmten, im Wesentlichen vertikalen Linien, besonders einfach bestimmt werden. So kann die Kotflügelkante beispielsweise durch eine Änderung der Y-Koordinate von einem Punkt auf einer der Linien zum nächsten Punkt bestimmt werden. Dies erhöht die Messrate der Messung der Position und Orientierung der Kotflügelkante weil es sich insoweit um ein sehr effizientes und sehr schnell ausführbare Vorgehensweise zur Bestimmung der Position der Kotflügelkanten in den Punkten in dem jeweiligen Volumen handelt.

**In** einer weiteren Ausführung des erfindungsgemäßen Verfahrens nach Anspruch 2 werden vor der Bestimmung der Position und Orientierung der Kotflügelkante die zur Auswertung herangezogenen Daten wie folgt ausgewählt.
> Es wird eine erste Reduzierungsteilmenge von Punkten der Punktwolken aus der Teilmenge erzeugt.
> Es werden nur Punkte der Punktwolken aus lediglich einem Teil der Volumina (im Sinne des Anspruchs 1) berücksichtigt.
> In einem ersten Auswertungsschritt werden die Lage- und Orientierungsdaten der Kotflügelkante als erster Datensatz anhand der Punkte der ersten Reduzierungsteilmenge ermittelt.
> Aus den Lage- und Orientierungsdaten Kotflügelkante in dem ersten Datensatz werden die Lage- und Orientierungsdaten der Kotflügelkante in einem zweiten Datensatz ermittelt,
   o indem zu den Lage- und Orientierungsdaten der Kotflügelkante in dem ersten Datensatz durch eine Extrapolation der Lage- und Orientierungsdaten der Kotflügelkante des ersten Datensatzes ergänzte Lage- und Orientierungsdaten der Kotflügelkante auch für die Volumina bestimmt werden, die bei der Erzeugung der ersten Reduzierungsteilmenge unberücksichtigt geblieben sind und
   o indem der zweite Datensatz aus der Vereinigungsmenge der Lage- und Orientierungsdaten der Kotflügelkante des ersten Datensatzes mit den ergänzten Lage- und Orientierungsdaten der Kotflügelkante gebildet wird.
> Es wird eine zweite Reduzierungsteilmenge aus der Teilmenge erzeugt, indem die Schnittmenge gebildet wird aus
   o den Punkten der Punktwolke der Teilmenge
   o mit einer definierten Umgebung um die Punkte des zweiten Datensatzes.
> Die Bestimmung der Position und Orientierung der Kotflügelkante im Ergebnisdatensatz erfolgt anhand der Daten der zweiten Reduzierungsteilmenge.

Begrifflich werden im Zusammenhang mit Anspruch 2 identische Begriffe verwendet zum Anspruch 4. Die beiden Ansprüche sind jeweils auf den Anspruch 1 rückbezogen, wobei Anspruch 4 nicht auf Anspruch 2 rückbezogen ist. Insofern ist die erste Reduzierungsteilmenge, der erste Datensatz sowie die zweite Reduzierungsteilmenge und der zweite Datensatz im Anspruch 2 zwar begrifflich identisch zum Anspruch 4, haben im Zusammenhang mit dem Anspruch 2 jedoch eine andere Bedeutung, die sich im jeweiligen Zusammenhang aus den Merkmalen des Anspruchs 2 oder aus den Merkmalen des Anspruchs 4 ergibt.

Vorteilhaft wird die Auswertung des ersten Datensatzes (im Anspruch 2) anhand der geringeren Anzahl der Punkte in der ersten Reduzierungsteilmenge (im Anspruch 2) im Vergleich zur Teilmenge beschleunigt.

Besonders vorteilhaft können die Daten des ersten Datensatzes (im Anspruch 2) auch für die Volumina, die bei der Bestimmung der Position und Orientierung der Kotflügelkante unberücksichtigt sind, durch Extrapolation der Daten des ersten Datensatzes (im Anspruch 2) ergänzt werden. Eine solche Extrapolation der Daten ist dabei schneller als eine Bestimmung der Position und Orientierung der Kotflügelkante anhand der unberücksichtigten Volumina. Insoweit wird ein zweiter Datensatz gebildet aus der Vereinigungsmenge der Punkte des ersten Datensatzes mit den durch diese Extrapolation zusätzlich gewonnenen Punkten.

Zur genaueren Bestimmung der Position und Orientierung der Kotflügelkante wird dabei eine zweite Reduzierungsteilmenge (im Anspruch 2) aus der Teilmenge erzeugt. Hierbei wird die Schnittmenge gebildet aus:
> den Punkten der Teilmenge
➢ mit einer definierten Umgebung um die Punkte des zweiten Datensatzes (im Anspruch 2).

Diese Umgebung kann beispielsweise als Quader ausgestaltet sein. Es ist auch möglich, diese Umgebung als Torus zu definieren, der als Mittellinie die Linie der Kotflügelkante aufweist, die im zweiten Datensatz ermittelt wurde. Vorteilhaft umfasst die Umgebung alle Punkte mit einem bestimmten Abstand von den Punkten des zweiten Datensatzes. Besonders vorteilhaft ist dieser Abstand von dem mittleren Abstand der Punkte der ersten Reduzierungsteilmenge abhängig. Die definierte Umgebung kann auch so festgelegt werden, dass es sich dabei um alle Punkte handelt, deren Z-Koordinaten von den Z-Koordinaten der Punkte des ersten Datensatzes betragsmäßig um nicht mehr abweichen als ein vorgegebener Grenzwert. Bei der "Punkteauswahl" bleiben damit die Y-Koordinaten unberücksichtigt. Der Verlauf dieser Y-Koordinaten wird in der nachfolgenden Auswertung betrachtet, um aus einer sprunghaften Änderung der Y-Koordinaten von Punkten, die in Z-Richtung benachbart sind, auf die Position und Orientierung der Kotflügelkante zu schließen.

Die Punkte der zweiten Reduzierungsteilmenge werden zur Bestimmung der Position und Orientierung der Kotflügelkante verwendet. Besonders vorteilhaft weist die zweite Reduzierungsteilmenge die gleiche Dichte der Punkte der Punktwolke (Punktabstand) auf wie die Teilmenge. Dadurch bleibt die Mesgenauigkeit bei der Auswertung der Position und Orientierung der Kotflügelkante erhalten. Durch die Reduzierung auf die Punkte um die Punkte des zweiten Datensatzes (im Sinne des Anspruchs 2) wird die Menge der auszuwertenden Punkte im Vergleich zur Teilmenge reduziert. Dadurch kann die Bestimmung der Position und Orientierung der Kotflügelkante besonders schnell erfolgen. Dennoch bleibt im letzten Schritt der Auswertung die hohe Messgenauigkeit erhalten, indem gezielt für diese Auswertung die Daten im interessierenden Bereich ausgewählt werden. Vorteilhaft werden dadurch höhere Messraten ermöglicht.

Dabei ist es als Weiterbildung des Anspruchs 2 gemäß Anspruch 3 zweckmäßig, bei der Erzeugung der ersten Reduzierungsteilmenge nur einen Teil der Punkte der Teilmenge in den bei der Erzeugung der Teilmenge berücksichtigten Volumina in die erste Reduzierungsteilmenge zu übernehmen. Dabei ist der Punktabstand zwischen den in die erste Reduzierungsteilmenge übernommenen Punkten größer als der Punktabstand in der Teilmenge.

Vorteilhaft wird dadurch die Anzahl der Punkte in der ersten Reduzierungsteilmenge weiter reduziert, wodurch eine noch schnellere Auswertung der Daten des ersten Datensatzes (im Sinne des Anspruchs 2) möglich ist.

Es ist zur Erfindung gehörig, dass nach Anspruch 4 vor der Bestimmung der Position und Orientierung der Kotflügelkante die zur Auswertung herangezogenen Daten ausgewählt werden,
> indem eine erste Reduzierungsteilmenge von Punkten der Punktwolken aus der Teilmenge erzeugt wird,
   o indem nur ein Teil der Punkte der Teilmenge in die erste Reduzierungsteilmenge übernommen wird,
      ▪ wobei der Punktabstand zwischen den in die erste Reduzierungsteilmenge übernommenen Punkten größer ist als der Punktabstand in der Teilmenge,
> wobei in einem ersten Auswertungsschritt die Lage- und Orientierungsdaten der Kotflügelkante als erster Datensatz anhand der Punkte der ersten Reduzierungsteilmenge ermittelt werden,
> wobei eine zweite Reduzierungsteilmenge aus der Teilmenge erzeugt wird,
   o indem die Schnittmenge gebildet wird
      ▪ aus den Punkten der Punktwolke der Teilmenge
      ▪ mit einer definierten Umgebung um die Punkte des ersten Datensatzes,
> wobei die Bestimmung der Position und Orientierung der Kotflügelkante im Ergebnisdatensatz anhand der Daten der zweiten Reduzierungsteilmenge erfolgt.

Begrifflich werden im Zusammenhang mit Anspruch 4 identische Begriffe verwendet zum Anspruch 2. Die beiden Ansprüche sind jeweils auf den Anspruch 1 rückbezogen, wobei Anspruch 4 nicht auf Anspruch 2 rückbezogen ist. Insofern ist die erste Reduzierungsteilmenge, der erste Datensatz sowie die zweite Reduzierungsteilmenge und der zweite Datensatz im Anspruch 4 zwar begrifflich identisch zum Anspruch 2, haben im Zusammenhang mit dem Anspruch 4 jedoch eine andere Bedeutung, die sich nachfolgend in der Erörterung des Anspruchs 4 im Zusammenhang aus den Merkmalen des Anspruchs 4 ergibt.

Gegenüber dem Verfahren nach Anspruch 1 erweist sich diese Vorgehensweise nach Anspruch 4 als vorteilhaft. Bei der Vorgehensweise nach Anspruch 1 besteht in der Teilmenge in den einzelnen Volumina über den gesamten Bereich der Koordinaten in Richtung der Z-Achse eine hohe Punktdichte. Das bedeutet, dass in der Teilmenge noch eine größere Anzahl an Daten enthalten ist, die in Richtung der Z-Achse vergleichsweise weit entfernt sind von der Kotflügelkante. Es werden insoweit noch einige Rechenoperationen durchgeführt, die zu keinem sinnvollen Ergebnis führen im Hinblick auf das Auffinden der Kotflügelkante.

Mit der ersten Reduzierungsteilmenge im Sinne des Anspruchs 4 kann die Position und Orientierung der Kotflügelkante zunächst mit einer geringeren Punktdichte (höherem Punktabstand zwischen den Punkten) mit einer weniger genauen Auswertung ermittelt werden. Dabei ist der Punktabstand zwischen den in die erste Reduzierungsteilmenge übernommenen Punkten größer als der Punktabstand in der Teilmenge. Dies kann beispielsweise durch Entfernen einzelner Punkte aus der Teilmenge erfolgen. Beispielsweise kann jeder zweite Punkt aus der Teilmenge entfernt werden. Es ist auch möglich, den Punktabstand noch weiter zu erhöhen. Durch den größeren Punktabstand und die damit verbundene geringere Dichte der Punkte in der ersten Reduzierungsteilmenge kann eine erste Bestimmung der Position und Orientierung der Kotflügelkante in einem ersten Datensatz besonders schnell erfolgen.

Durch den ersten Datensatz ergibt sich zunächst die ungefähre Position und Orientierung der Kotflügelkante. Es können dadurch Punkte eines ersten Datensatzes berechnet werden, die der Position und Orientierung der Kotflügelkante entsprechen. Diese Berechnung erfolgt auf Basis der ersten Reduzierungsteilmenge im Koordinatensystem des Prüfstandes. Zur genaueren Bestimmung der Position und Orientierung der Kotflügelkante wird dabei eine zweite Reduzierungsteilmenge aus der Teilmenge erzeugt. Diese zweite Reduzierungsteilmenge wird gebildet durch die Schnittmenge, die sich ergibt aus:
> den Punkten der Teilmenge
> mit einer definierten Umgebung um die Punkte des ersten Datensatzes.

Diese Umgebung kann beispielsweise als Quader ausgestaltet sein. Es ist auch möglich, diese Umgebung als Torus zu definieren, der als Mittellinie die Linie der Kotflügelkante aufweist, die im ersten Datensatz ermittelt wurde. Vorteilhaft umfasst die Umgebung alle Punkte mit einem bestimmten Abstand von den Punkten des ersten Datensatzes. Besonders vorteilhaft ist dieser Abstand von dem mittleren Abstand der Punkte der ersten Reduzierungsteilmenge abhängig. Die definierte Umgebung kann auch so festgelegt werden, dass es sich dabei um alle Punkte handelt, deren Z-Koordinaten von den Z-Koordinaten der Punkte des ersten Datensatzes betragsmäßig um nicht mehr abweichen als ein vorgegebener Grenzwert. Bei der "Punkteauswahl" bleiben damit die Y-Koordinaten unberücksichtigt. Der Verlauf dieser Y-Koordinaten wird in der nachfolgenden Auswertung betrachtet, um aus einer sprunghaften Änderung der Y-Koordinaten von Punkten, die in Z-Richtung benachbart sind, auf die Position und Orientierung der Kotflügelkante zu schließen.

Die Punkte der zweiten Reduzierungsteilmenge werden zur Bestimmung der Position und Orientierung der Kotflügelkante verwendet. Vorteilhaft weist die zweite Reduzierungsteilmenge die gleiche Dichte der Punkte (Punktabstand) auf wie die Teilmenge. Dadurch bleibt die Messgenauigkeit der hohen Auflösung der Punkte in der Punktwolke erhalten bei der Bestimmung der Position und Orientierung der Kotflügelkante. Durch die Reduzierung der Punkte in der zweiten Reduzierungsteilmenge auf lediglich die Punkte, die in einer Umgebung um die zuvor (mit einer reduzierten messtechnischen Auflösung) bestimmte Position und Orientierung der Kotflügelkante liegen, wird die Menge der auszuwertenden Punkte im Vergleich zur Teilmenge reduziert. Diese Reduzierung erfolgt jedoch gezielt auf den für die genauere Auswertung interessierenden Bereich. Insgesamt erfolgt dadurch die Bestimmung der Position und Orientierung der Kotflügelkante besonders schnell, aber dennoch mit hoher Genauigkeit.

Vorteilhaft werden dadurch höhere Messraten ermöglicht. Dies erweist sich besonders vorteilhaft bei einem Einsatz des Verfahrens in der Produktion von Fahrzeugen. Dort kommt es entscheidend auf kurze Taktzeiten bei gleichzeitig hoher Auflösung und Genauigkeit an.

Es werden Ausführungsbeispiele der Erfindung anhand von Zeichnungen näher beschrieben.

Es zeigen
- Fig. 1: eine perspektivische Ansicht eines Kotflügels eines Fahrzeuges, sowie eine Vorrichtung zur photogrammetrischen Vermessung von Objekten,
- Fig. 2: eine Seitenansicht eines Kotflügels eines Fahrzeuges, sowie eine Vorrichtung zur photogrammetrischen Vermessung von Objekten,
- Fig. 3: eine weitere Seitenansicht eines Kotflügels eines Fahrzeuges, sowie eine Vorrichtung zur photogrammetrischen Vermessung von Objekten,
- Fig. 4: eine weitere Seitenansicht eines Kotflügels eines Fahrzeuges, sowie eine Vorrichtung zur photogrammetrischen Vermessung von Objekten.

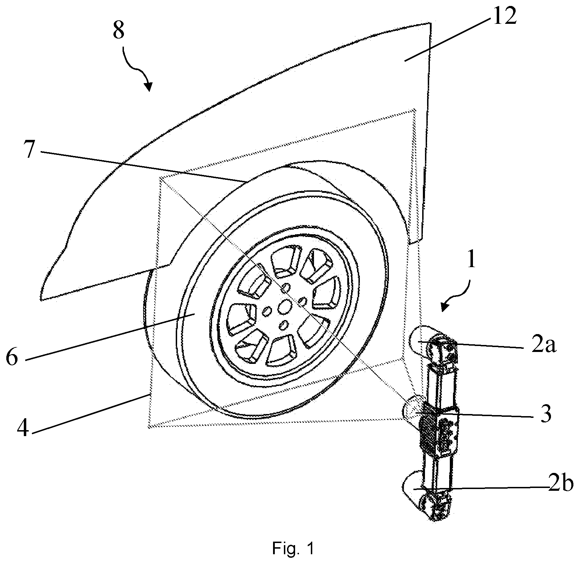

Die Figuren 1, 2, 3 und 4 zeigen zwei Abbildeinheiten 2a und 2b und eine Beleuchtungseinheit 3 einer Vorrichtung zur photogrammetrischen Vermessung von Objekten 1. Über die Beleuchtungseinheit 3 wird ein Lichtmuster 4 auf einen Kotflügel 12 eines Fahrzeug 8 projiziert. Dieses Lichtmuster 4 wird von den beiden Abbildeinheiten 2a und 2b aufgenommen. Das auf das Fahrzeug 8 projizierte Lichtmuster 4 wird durch Anregen einer Vibration der Beleuchtungseinheit 3 oder zumindest wenigstens eines Bauteils der Beleuchtungseinheit 3 verschoben. **In** einer Auswerteeinheit erfolgt die stereophotogrammetrische Bestimmung einer 3D-Punktwolke aus den Aufnahmen des während der Vibration der Beleuchtungseinheit 3 auf das Fahrzeug projizierten Lichtmusters 4 durch die beiden Abbildeinheiten 2a und 2b. Diese Punktwolke entspricht der Position von Punkten auf der Oberfläche des zu vermessenden Objekts.

Das Fahrzeug 8 weist ein an dem Fahrzeug 8 montiertes Rad 6 auf. Der Kotflügel 12 ist Teil der Karosserie des Fahrzeugs 8. Der Kotflügel 12 endet in Richtung des Rades 6 an seinem unteren Ende in der Kotflügelkante 7.

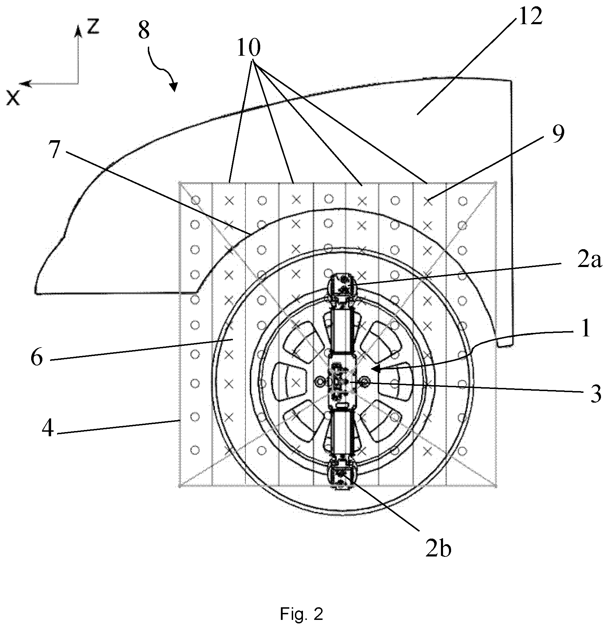

Das Fahrzeug 8 befindet sich in einem Prüfstand, wobei der Prüfstand ein Koordinatensystem aufweist, bei dem die Z-Achse die vertikale Achse ist, die X-Achse eine Achse in dem Prüfstand, die sich in der horizontalen Ebene in Längsrichtung des zur Prüfung in dem Prüfstand befindlichen Fahrzeugs 8 erstreckt, und die Y-Achse eine Achse in dem Prüfstand, die sich senkrecht zur X-Achse in der horizontalen Ebene erstreckt. In der Darstellung der Figur 2 sind die Z-Achse und die X-Achse dargestellt. Die Y-Achse erstreckt sich in die Zeichnungsebene hinein.

Wie in Figur 2 weiter dargestellt wird in einem ersten Schnitt eine Teilmenge von Punkten aus den Punkten der 3D-Punktwolke 9 identifiziert. Dabei wird die Teilmenge durch die Schnittmenge der Punkte der Punktwolke 9 mit mehreren Volumina 10 gebildet. Jedes Volumen 10 wird durch zwei Ebenen begrenzt, die sich sowohl in Richtung der Y-Achse als auch in Richtung der Z-Achse erstrecken. Diese beiden Ebenen weisen in Richtung der X-Achse zueinander einen Abstand Δx auf. Diese Volumina 10 befinden sich an benachbarten Positionen xₙ auf der X- Achse. Dabei sind die Punkte der Punktwolke 9 innerhalb der Volumina 10 mit Kreuzen und die Punkte der Punktwolke 9 außerhalb der Volumina 10 durch Kreise dargestellt.

Der Abstand der beiden Ebenen Δx ist größer als der mittlere Abstand der Punkte der Punktwolke 9, jedoch bevorzugt kleiner als das Doppelte des Abstands der Punkte der Punktwolke 9. Vorteilhaft befindet sich dadurch mindestens ein Punkt pro Volumen 10 und Z-Koordinate in der Teilmenge. Dadurch bilden die Punkte in einem Volumen 10 eine der Oberfläche des Fahrzeugs folgende, gekrümmte und im Wesentlichen vertikale Linie. Die Punkte der gekrümmten Linie befinden sich dabei im Wesentlichen in einer Ebene, die sich in der Y- und Z-Richtung erstreckt. Die Bestimmung der Position und Orientierung der Kotflügelkante 7 erfolgt als Ergebnisdatensatz auf der Basis der Teilmenge der Punkte der 3D-Punktwolke 9.

Figur 2 visualisiert insofern das Bilden der Teilmenge nach Anspruch 1.

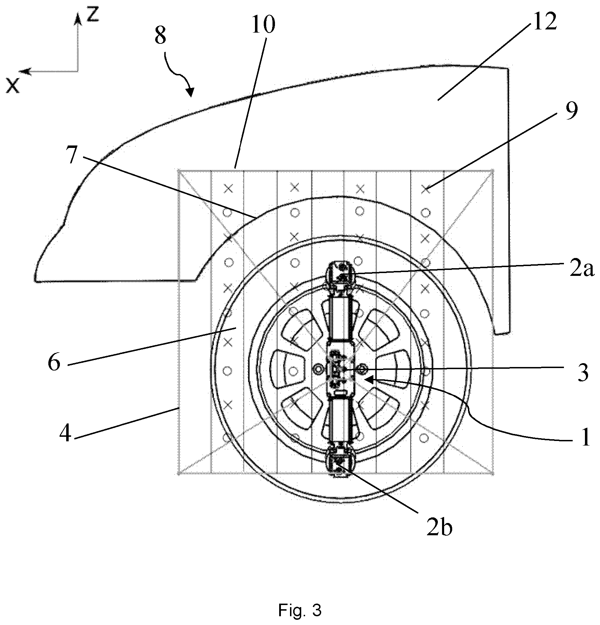

Wie in Figur 3 dargestellt wird in einem zweiten Schritt aus den Punkten der Punktwolken der der Teilmenge eine erste Reduzierungsteilmenge erzeugt. Dabei wird nur ein Teil der Punkte der Teilmenge in die erste Reduzierungsteilmenge übernommen. Der Punktabstand zwischen den in die erste Reduzierungsteilmenge übernommenen Punkten ist größer als der Punktabstand in der Teilmenge.

Die Punkte innerhalb der Teilmenge, die in die erste Reduzierungsteilmenge aufgenommen werden, sind durch Kreuze dargestellt. Die Punkte innerhalb der Teilmenge, die nicht in die erste Reduzierungsteilmenge aufgenommen werden, sind durch Kreise dargestellt. In der Darstellung der Figur 3 wird bei der Übernahme in die erste Reduzierungsteilmenge jeder zweite Punkt aus der Teilmenge entfernt. Durch den größeren Punktabstand und die damit verbundene geringere Dichte der Punkte in der ersten Reduzierungsteilmenge kann eine erste, grobe Bestimmung der Position und Orientierung der Kotflügelkante 7 in einem ersten Datensatz besonders schnell erfolgen.

Es handelt sich insofern bei der Darstellung der Figur 3 um eine Visualisierung bei der Bestimmung der ersten Reduzierungsteilmenge im Sinne des Anspruchs 2. Es wurden also ein erster Datensatz (im Sinne des Anspruchs 2) ermittelt, der den Daten der Position und Orientierung der Kotflügelkante 7 auf Basis der Daten der ersten Reduzierungsteilmenge entspricht.

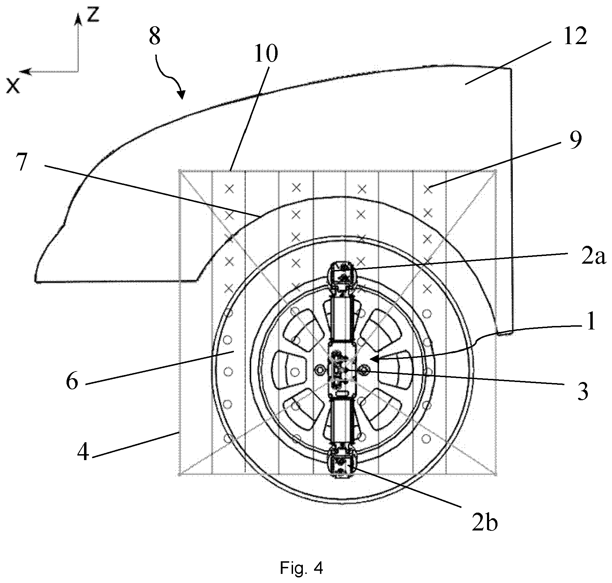

Wie in Figur 4 dargestellt wird in einem folgenden Schritt zur Darstellung der Figur 3 eine zweite Reduzierungsteilmenge erzeugt. Dies erfolgt, indem die Schnittmenge der Punkte der Punktwolke 9 der Teilmenge mit einer definierten Umgebung um die Punkte des ersten Datensatzes gebildet wird. Die Punkte innerhalb der Teilmenge, die in die zweite Reduzierungsteilmenge aufgenommen werden, sind durch Kreuze dargestellt. Die Punkte innerhalb der Teilmenge, die nicht in die zweite Reduzierungsteilmenge aufgenommen werden, sind durch Kreise dargestellt. Die Bestimmung der Position und Orientierung der Kotflügelkante 7 erfolgt im Ergebnisdatensatz anhand der Daten der zweiten Reduzierungsteilmenge.

## Patentansprüche

1. Verfahren zur Vermessung der Kotflügelkante (7) eines Fahrzeuges (8) in einem Prüfstand,
> wobei der Prüfstand ein Koordinatensystem aufweist,
o wobei in dem Koordinatensystem die Z-Achse die vertikale Achse in dem Prüfstand ist sowie
o die X-Achse eine Achse in dem Prüfstand, die sich in der horizontalen Ebene in Längsrichtung eines zur Prüfung in dem Prüfstand befindlichen Fahrzeugs (8) erstreckt, sowie
o die Y-Achse eine Achse, die sich senkrecht zur X-Achse sowie senkrecht zur Z-Achse erstreckt,
> wobei das Verfahren folgende Schritte umfasst:
➢ Projektion eines gleichbleibenden Lichtmusters (4) auf ein Fahrzeug (8) mit mindestens einer Beleuchtungseinheit (3), wobei das Lichtmuster (4) derart in gleich große Teilbereiche unterteilbar ist, dass die Teilbereiche des Lichtmusters (4) individualisiert sind, so dass die Teilbereiche des Lichtmusters (4) in dem Lichtmuster (4) einzigartig sind,
➢ Aufnahme des auf das Fahrzeug (8) projizierten Lichtmusters (4) mit zwei Abbildeinheiten (2a, 2b), wobei die zwei Abbildeinheiten (2a, 2b) jeweils das momentan auf das Fahrzeug (8) projizierte Lichtmuster (4) aufnehmen,
> Verschieben des auf das Fahrzeug (8) projizierten Lichtmusters (4) durch Anregen einer Vibration der Beleuchtungseinheit (3) oder zumindest wenigstens eines Bauteils der Beleuchtungseinheit (3),
➢ Stereophotogrammetrische Bestimmung einer 3D-Punktwolke aus den Aufnahmen der während der Vibration der Beleuchtungseinheit (3) oder des zumindest wenigstens einen Bauteils der Beleuchtungseinheit (3) auf das Fahrzeug (8) projizierten Lichtmuster (4) durch die beiden Abbildeinheiten (2a, 2b),
> Identifizieren einer Teilmenge von Punkten aus der 3D-Punktwolke (9), wobei die Teilmenge gebildet wird durch die Schnittmenge
o der Punkte der Punktwolke (9)
o mit mehreren Volumina (10),
▪ wobei jedes Volumen (10) begrenzt wird durch zwei Ebenen, die sich sowohl in Richtung der Y-Achse als auch in Richtung der Z-Achse erstrecken,
▪ wobei diese beiden Ebenen zueinander in Richtung der X-Achse einen Abstand Δx aufweisen,
▪ wobei sich mehrere dieser Volumina (10) an benachbarten Positionen xₙ auf der X- Achse befinden, so dass als Resultat die Teilmenge eine 3D - Punktwolke mit Punkten innerhalb der Volumina ist,
> Bestimmung der Position und Orientierung der Kotflügelkante (7) als Ergebnisdatensatz auf der Basis der Teilmenge der Punkte der 3D-Punktwolke.

2. Verfahren nach Anspruch 1, **dadurch gekennzeichnet,**
**dass** vor der Bestimmung der Position und Orientierung der Kotflügelkante (7) die zur Auswertung herangezogenen Daten ausgewählt werden,
➢ indem eine erste Reduzierungsteilmenge von Punkten der Punktwolken (9) aus der Teilmenge erzeugt wird,
o indem nur Punkte der Punktwolken aus lediglich einem Teil der Volumina (10) berücksichtigt werden,
> wobei in einem ersten Auswertungsschritt die Lage- und Orientierungsdaten der Kotflügelkante (7) als erster Datensatz anhand der Punkte der ersten Reduzierungsteilmenge ermittelt werden,
> wobei aus den Lage- und Orientierungsdaten der Kotflügelkante (7) in dem ersten Datensatz die Lage- und Orientierungsdaten der Kotflügelkante (7) in einem zweiten Datensatz ermittelt werden,
o indem zu den Lage- und Orientierungsdaten der Kotflügelkante (7) in dem ersten Datensatz durch eine Extrapolation der Lage- und Orientierungsdaten der Kotflügelkante (7) des ersten Datensatzes ergänzte Lage- und Orientierungsdaten der Kotflügelkante auch für die Volumina (10) bestimmt werden, die bei der Erzeugung der ersten Reduzierungsteilmenge unberücksichtigt geblieben sind und
o indem der zweite Datensatz aus der Vereinigungsmenge der Lage- und Orientierungsdaten der Kotflügelkante (7) des ersten Datensatzes mit den ergänzten Lage- und Orientierungsdaten der Kotflügelkante (7) gebildet wird,
> wobei eine zweite Reduzierungsteilmenge aus der Teilmenge erzeugt wird, indem die Schnittmenge gebildet wird
o aus den Punkten der Punktwolke der Teilmenge
o mit einer definierten Umgebung um die Punkte des zweiten Datensatzes,
> wobei die Bestimmung der Position und Orientierung der Kotflügelkante (7) im Ergebnisdatensatz anhand der Daten der zweiten Reduzierungsteilmenge erfolgt.

3. Verfahren nach Anspruch 2, **dadurch gekennzeichnet,**
**dass** bei der Erzeugung der ersten Reduzierungsteilmenge nur ein Teil der Punkte der Teilmenge in den bei der Erzeugung der Teilmenge berücksichtigten Volumina (10) in die erste Reduzierungsteilmenge übernommen wird,
> wobei der Punktabstand zwischen den in die erste Reduzierungsteilmenge übernommenen Punkten größer ist als der Punktabstand in der Teilmenge.

4. Verfahren nach Anspruch 1, **dadurch gekennzeichnet,**
**dass** vor der Bestimmung der Position und Orientierung der Kotflügelkante (7) die zur Auswertung herangezogenen Daten ausgewählt werden,
➢ indem eine erste Reduzierungsteilmenge von Punkten der Punktwolke (9) aus der Teilmenge erzeugt wird,
o indem nur ein Teil der Punkte der Teilmenge in die erste Reduzierungsteilmenge übernommen wird,
▪ indem der Punktabstand zwischen den in die erste Reduzierungsteilmenge übernommenen Punkten größer ist als der Punktabstand in der Teilmenge,
> wobei in einem ersten Auswertungsschritt die Lage- und Orientierungsdaten der Kotflügelkante (7) als erster Datensatz anhand der Punkte der ersten Reduzierungsteilmenge ermittelt werden,
> wobei eine zweite Reduzierungsteilmenge aus der Teilmenge erzeugt wird, indem die Schnittmenge gebildet wird
o aus den Punkten der Punktwolke in der Teilmenge
o mit einer definierten Umgebung um die Punkte des ersten Datensatzes,
> wobei die Bestimmung der Position und Orientierung der Kotflügelkante (7) im Ergebnisdatensatz anhand der Daten der zweiten Reduzierungsteilmenge erfolgt.

## Claims

1. Method for measuring the wing edge (7) of a vehicle (8) on a test bench,
➢ wherein the test bench has a coordinate system,
O wherein, in the coordinate system, the Z axis is the vertical axis on the test bench and
O the X axis is an axis on the test bench extending in the horizontal plane in the longitudinal direction of a vehicle (8) being tested on the test bench, and
O the Y axis is an axis extending perpendicular to the X axis and perpendicular to the Z axis,
➢ wherein the method comprises the following steps:
➢ projecting a uniform light pattern (4) onto a vehicle (8) using at least one illumination unit (3), wherein the light pattern (4) can be divided into subregions of equal size in such a way that the subregions of the light pattern (4) are individualized, such that the subregions of the light pattern (4) in the light pattern (4) are unique,
➢ recording the light pattern (4) projected onto the vehicle (8) using two imaging units (2a, 2b), wherein the two imaging units (2a, 2b) each record the light pattern (4) projected instantaneously onto the vehicle (8),
➢ moving the light pattern (4) projected onto the vehicle (8) by stimulating a vibration of the illumination unit (3) or at any rate of at least one component of the illumination unit (3),
➢ stereophotogrammetrically determining a 3D point cloud from the recordings, taken by the two imaging units (2a, 2b), of the light pattern (4) projected onto the vehicle (8) during vibration of the illumination unit (3) or of the at any rate at least one component of the illumination unit (3),
➢ identifying a subset of points from the 3D point cloud (9), wherein the subset is formed by the intersection of
O the points of the point cloud (9)
O with multiple volumes (10),
▪ wherein each volume (10) is delimited by two planes both extending in the direction of the Y axis and in the direction of the Z axis,
▪ wherein these two planes are at a distance Δx from one another in the direction of the X axis,
▪ wherein a plurality of these volumes (10) are located at adjacent positions xₙ on the X axis, such that the subset as a result is a 3D point cloud with points within the volumes,
➢ determining the position and orientation of the wing edge (7) as a result data set based on the subset of the points of the 3D point cloud.

2. Method according to Claim 1, **characterized in that** the data used for the evaluation are selected before the position and orientation of the wing edge (7) are determined
➢ by creating from the subset a first reduction subset of points of the point clouds (9),
O by only points of the point clouds from only a portion of the volumes (10) being taken into account,
➢ wherein, in a first evaluation step, the position and orientation data of the wing edge (7) are determined as a first data set based on the points of the first reduction subset,
➢ wherein the position and orientation data of the wing edge (7) in the first data set are used to determine the position and orientation data of the wing edge (7) in a second data set,
O by, supplementary to the position and orientation data of the wing edge (7) in the first data set, position and orientation data of the wing edge also being determined, by extrapolation of the position and orientation data of the wing edge (7) of the first data set, for the volumes (10) that were not taken into account when producing the first reduction subset and
O by forming the second data set from the union of the position and orientation data of the wing edge (7) of the first data set with the supplementary position and orientation data of the wing edge (7),
➢ wherein a second reduction subset is produced from the subset by forming the intersection
O from the points of the point cloud of the subset
O with a defined environment around the points of the second data set,
➢ wherein the position and orientation of the wing edge (7) in the result data set are determined using the data of the second reduction subset.

3. Method according to Claim 2, **characterized in that** when the first reduction subset is produced, only a portion of the points of the subset in the volumes (10) taken into account during production of the subset is incorporated into the first reduction subset,
➢ wherein the point spacing between the points incorporated into the first reduction subset is greater than the point spacing in the subset.

4. Method according to Claim 1, **characterized in that** the data used for the evaluation are selected before the position and orientation of the wing edge (7) are determined
➢ by creating from the subset a first reduction subset of points of the point cloud (9),
O by incorporating only a portion of the points of the subset into the first reduction subset,
■ by the point spacing between the points incorporated into the first reduction subset being greater than the point spacing in the subset,
➢ wherein, in a first evaluation step, the position and orientation data of the wing edge (7) are determined as a first data set based on the points of the first reduction subset,
➢ wherein a second reduction subset is produced from the subset by forming the intersection
O from the points of the point cloud in the subset
O with a defined environment around the points of the first data set,
➢ wherein the position and orientation of the wing edge (7) in the result data set are determined using the data of the second reduction subset.

## Revendications

1. Procédé pour mesurer, sur un banc d'essai, le bord (7) d'un garde-boue d'un véhicule (8),
➢ le banc d'essai comprenant un système de coordonnées
o l'axe Z étant, dans le système de coordonnées, l'axe vertical dans le banc d'essai et
∘ l'axe X étant un axe dans le banc d'essai qui s'étend dans le plan horizontal dans la direction longitudinale d'un véhicule (8) se trouvant dans le banc d'essai pour être contrôlé, et
o l'axe Y étant un axe qui s'étend perpendiculairement à l'axe X et perpendiculairement à l'axe Z,
➢ le procédé comprenant les étapes suivantes :
➢ projection d'un motif lumineux constant (4) sur un véhicule (8) au moyen d'au moins une unité d'éclairage (3), le motif lumineux (4) étant apte à être divisé en sous-zones de tailles égales de telle sorte que les sous-zones du motif lumineux (4) soient individualisées, afin que les sous-zones du motif lumineux (4) soient uniques dans le motif lumineux (4),
➢ enregistrement du motif lumineux (4) projeté sur le véhicule (8) au moyen de deux unités de formation d'images (2a, 2b), les deux unités de formation d'image (2a, 2b) enregistrant chacune le motif lumineux (4) projeté à cet instant sur le véhicule (8),
➢ déplacement du motif lumineux (4) projeté sur le véhicule (8) par excitation d'une vibration de l'unité d'éclairage (3) ou au moins d'un composant de l'unité d'éclairage (3),
➢ détermination stéréophotogrammétrique d'un nuage de points 3D à partir des enregistrements par les deux unités de formation d'image (2a, 2b) du motif lumineux (4) projeté sur le véhicule (8) pendant la vibration de l'unité d'éclairage (3) ou d'au moins un composant de l'unité d'éclairage (3),
> identification d'un sous-ensemble de points à partir du nuage de points 3D (9), le sous-ensemble étant formé par l'intersection
o des points du nuage de points (9)
o avec plusieurs volumes (10),
▪ chaque volume (10) étant délimité par deux plans qui s'étendent à la fois dans la direction de l'axe Y et dans la direction de l'axe Z,
▪ ces deux plans étant espacés l'un de l'autre d'une distance Δx selon l'axe X,
▪ plusieurs de ces volumes (10) se trouvant à des positions xₙ adjacentes sur l'axe X, de sorte que le sous-ensemble résultant est un nuage de points 3D avec des points à l'intérieur des volumes,
> détermination de la position et de l'orientation du bord (7) du garde-boue sous forme d'ensemble de données de résultat sur la base du sous-ensemble des points du nuage de points 3D.

2. Procédé selon la revendication 1, **caractérisé en ce qu'**avant de déterminer la position et l'orientation du bord (7) du garde-boue, les données utilisées pour l'évaluation sont sélectionnées
> en générant un premier sous-ensemble de réduction de points des nuages de points (9) à partir du sous-ensemble
o en ne prenant en compte que les points des nuages de points provenant d'une partie seulement des volumes (10),
➢ les données de position et d'orientation du bord (7) du garde-boue étant déterminées dans une première étape d'évaluation en tant que premier ensemble de données à partir des points du premier sous-ensemble de réduction,
➢ les données de position et d'orientation du bord (7) du garde-boue dans le premier ensemble de données étant utilisées pour déterminer les données de position et d'orientation du bord (7) du garde-boue dans un deuxième ensemble de données,
o en complétant les données de position et d'orientation du bord (7) du garde-boue dans le premier ensemble de données par une extrapolation des données de position et d'orientation du bord (7) du garde-boue du premier ensemble de données, de manière à déterminer également les données de position et d'orientation du bord du garde-boue pour les volumes (10), qui n'ont pas été prises en compte lors de la génération du premier sous-ensemble de réduction, et
o en formant le deuxième ensemble de données à partir de l'union des données de position et d'orientation du bord (7) du garde-boue du premier ensemble de données avec les données de position et d'orientation complétées du bord (7) du garde-boue,
> un deuxième sous-ensemble de réduction étant généré à partir du sous-ensemble en formant l'intersection
o des points du nuage de points du sous-ensemble
o avec un environnement défini autour des points du deuxième ensemble de données,
➢ la position et l'orientation du bord (7) du garde-boue étant déterminées dans l'ensemble de données de résultat au moyen des données du deuxième sous-ensemble de réduction.

3. Procédé selon la revendication 2, **caractérisé en ce que**, lors de la génération du premier sous-ensemble de réduction, seule une partie des points du sous-ensemble dans les volumes (10) pris en compte lors de la génération du sous-ensemble est transférée dans le premier sous-ensemble de réduction,
➢ la distance entre les points repris dans le premier sous-ensemble de réduction étant supérieure à la distance entre les points dans le sous-ensemble.

4. Procédé selon la revendication 1, **caractérisé en ce qu'**avant de déterminer la position et l'orientation du bord (7) du garde-boue, les données utilisées pour l'évaluation sont sélectionnées
> en générant un premier sous-ensemble de réduction de points du nuage de points (9) à partir du sous-ensemble,
o en ne transférant qu'une partie des points du sous-ensemble dans le premier sous-ensemble de réduction,
■ en rendant la distance entre les points repris dans le premier sous-ensemble de réduction supérieure à la distance entre les points dans le sous-ensemble,
> les données de position et d'orientation du bord (7) du garde-boue étant déterminées dans une première étape d'évaluation en tant que premier ensemble de données à partir des points du premier sous-ensemble de réduction,
> un deuxième sous-ensemble de réduction étant généré à partir du sous-ensemble en formant l'intersection
o des points du nuage de points dans le sous-ensemble
o avec un environnement défini autour des points du premier ensemble de données,
➢ la position et l'orientation du bord (7) du garde-boue étant déterminées dans l'ensemble de données de résultat au moyen des données du deuxième sous-ensemble de réduction.
